# EUROPEAN PATENT APPLICATION

(11) **EP 0 936 583 A1**
(43) Date of publication of application: **18.08.1999**
(21) Application number: 98102647.9
(22) Date of filing: 16.02.1998
(51) Int. Cl.: G07F 7/10

(54) **A method and system for providing a communication terminal device with networking access control features and in particular with internet authentication and online shopping features**

(71) Applicant: Al-Khaja, Ali Hassan, Tubli 711 (BH)
(72) Inventor: Al-Khaja, Ali Hassan, Tubli 711 (BH)
(74) Representative: Haft, von Puttkamer, Berngruber, Czybulka

(57) **Abstract**

The method for providing a communication terminal device (1) with networking access control features and in particular with Internet authentication and online shopping features is based on the combination of at least two cards with the corresponding PIN codes and/or passwords, whereby a credit card can be used. The system comprises personal computer hardware and networking elements as well as a card reading and/or writing device and can in particular be a portable computer with no more than 4 keys.

## Description

The present invention relates to a method and system for providing a communication terminal device having a modem or a network card with networking access control features and in particular with Internet authentication and/or online shopping features.

Millions of people are nowadays connecting their computer devices in the office or at home to data transmission lines in order to exchange data with other computers. Networking is getting very important in companies for co-ordination and information exchange purposes, in the school for education purposes as well as at home for entertainment and/or education purposes (also known as edutainment).

The most widely known global network is the Internet, which daily connects millions of users offering information such as news and stocks and services such as online shopping, travel reservations, games, etc.

In recent years thousands of companies have posted Web sites and provided employees with Internet e-mail and browsing. In addition to their "conventional" network, companies commonly use an internal Internet-like network, the so-called Intranet.

Traditionally these network services have been oriented towards adults but there are lots of children who are logging on to the Internet making use of the computer at home or at school.

In all these areas and especially with respect to the Internet with its very wide application spectrum there is a need to be able to connect from almost anywhere using a very simple user-friendly device without problems like carrying weight or having to connect numerous components to a central device. German Patent 195 44 766 discloses a compact device with a modem, a microprocessor, display means and a card reading device for various types of cards for communication with a network via a telecommunications system. Furthermore, the document WO 97/20418 discloses a compact device with a built-in smart card reading device for various applications. Both above-mentioned devices are keyboardless and have only four keys or less.

As the amount of sensitive information stored on the Internet and on the Intranet networks constantly increases, there is a problem concerning the authentication of the network users. This means that there is a need to give certain users access to certain files and data while excluding others from accessing them. A related problem is the restriction of the Internet and/or Intranet and/or database pages which an employee can access. Companies could save time and money by avoiding unnecessary "Internet surfing" by their employees while defining in detail which employees have rights to which services and for how long.

Another very important aspect is child safety and parental control. Especially the Internet is free from government by any entity. This means there are no limits on the kind of accessible information, which can include inappropriate material e.g. of a sexual and/or violent nature. Thus a restriction of a child's access to inappropriate material is very desirable.

Another problem concerns the transaction security using credit card information for online shopping.

The main object of the present invention is to provide a method for secure well-defined and preselected network access and especially for Internet and Intranet applications. This method should be applicable for parental control purposes as well as for defining access rights to network pages within a company or organisation.

Furthermore, an optional feature should be provided in order to allow restriction of the network access time as desired.

Another object of the invention is to provide a compact, user-friendly and location-independent network access system and device for applying the inventive method.

Additionally, the inventive system should offer the user a comfortable and safe payment option using his credit card online.

In order to give certain users access to certain Internet and/or Intranet sites containing sensitive or adult-oriented internal files and data, one must reliably authenticate the actual user. There are a variety of methods that positively identify a user. Passwords are the most common method of authentication used today, but users are notorious for making poor password choices that can be guessed by an experienced hacker.

The currently known solutions for parental control purposes are software-based and thus susceptible to being hacked. Furthermore, parents need a good knowledge of both the software and general computer matters in order to install, set up and configure them. Children very often know more about software than their parents. In such cases another kind of solution is needed.

Therefore the present invention solves the reliable authentication problem using hardware-based features by combining a password with a PIN code and two or more cards as stated in claims 1 and 9.

The first card is an ID card which can contain the user name, the corresponding password and the committed service provider (which can also be the company or the organisation the user is working for). By inserting this first card into the computer's card reading device the user is prompted to type in his PIN code.

Alternatively, for more security the user is prompted to enter his password, which is compared with the password stored on the card as stated in claim 4. For more simplicity and security the keyboard means can consist of a virtual keyboard shown on the screen (claim 25).

In a second step as stated in claim 1 the user must insert the application-dedicated (e.g. Internet) second card into the card reading device. On this card various "good" Internet or other network sites or application access rights (e.g. for Telnet, mail or FTP) can be stored. The user can only proceed with the desired network application if the user information on the first and the second cards is identical.

Such a card can be a family-friendly package card for use at school or at home or a company-dedicated networking card with all the sites the employee might need.

In a preferred embodiment, the second card unlocks the virtual or the real keyboard, allowing the user to select any desired site (claim 7).

In a third optional step as stated in claim 9 the user can insert a smart credit card into the card reading device. The card is accepted only if the ID number of the card is found in the communication terminal device's database (claim 10). On one credit card more than one ID can be stored, allowing the user to use the card with more computer systems.

By successfully inserting this card into the computer's card reading device the user is prompted to type in his PIN code.

The card reading device reads the information stored on the card. The CPU encrypts the data, adds an also encrypted actual time and date signal and sends them to the selected online vendor, who in turn can optionally send an encrypted signal containing date and time and indicating receipt of the data within a predefined short period of time prompting the user to send a digital signature to confirm the transaction (claims 13, 15). If the time period elapsed between sending of the data and receiving them by the vendor is larger than a predefined value, then - for security reasons - the transaction is not valid. The transaction is also invalid if the vendor's signal travelling time exceeds a predefined time value as well as if the vendor receives the user's digital signature after an also predefined time period (claims 12, 14, 16).

The second part of the inventive system contains the necessary hardware components and especially the card reading device as stated in claims 17 and 18.

The card reading device can be an external or built-in module suitable for all common personal computers and adapted to be connected e.g. like a disk drive. Thus every computer can be upgraded to reach this level of Internet access control. The card reading device can be a smart card reading device for smart cards having an integrated microprocessor and/or memory modules, which can e.g. contain user preferences and the corresponding software.

Optionally the (smart) card reading device can also be a (smart) card writing device (claims 26 and 27). With this feature it is possible to write information on the card about the time elapsed during network access e.g. on a daily and/or weekly and/or monthly basis. If the user exceeds some defined online time period , then the connection can be interrupted.

In a preferred embodiment of the invention, the card reader is built into a very simple portable computer with only one key and/or a mouse device according to WO 97/20418 (claim 21).

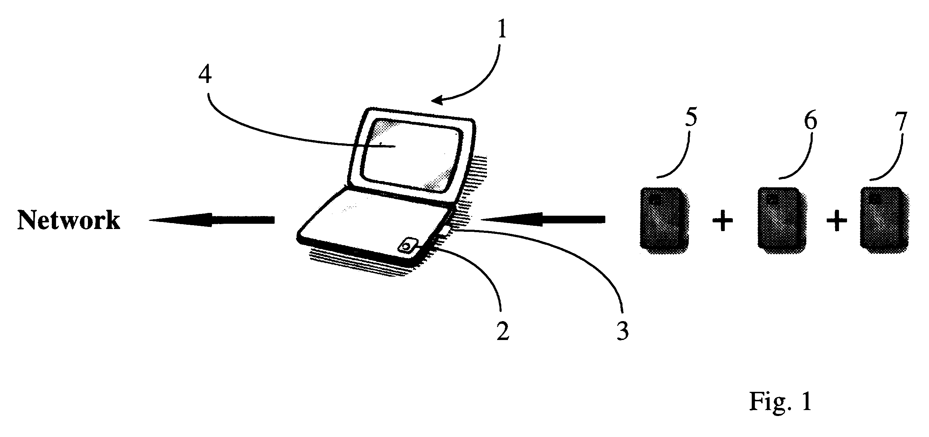

In the following the method of the invention as well as a preferred embodiment of the corresponding inventive system will be explained more closely by way of example with reference to the enclosed drawing whose single Figure 1 shows schematically the inventive system as well as the steps of the inventive method.

According to Figure 1 a communication terminal device 1 containing at least one key 2 is provided with an internal smart card reading/writing device 3. The communication terminal device 1 has display means 4 and is connectable to a network by means of a modem or a network card (not shown).

In order to access a network two smart cards are needed according to the present invention. The first card (ID card) 5 contains user-specific information such as the user name, the user password and the number of a service provider (or the user organisation or company).

In a first step after inserting the ID card 5 into the smart card reading/writing device 3 the user is prompted to enter his PIN code. For more security he may also be prompted to enter his password. Only after the verification of these data is the user logged in on the terminal device 1. In this preferred embodiment the terminal device is keyboardless. The user enters the required data by means of a virtual keyboard on the display means 4 and the key 2.

In a second step the user is prompted to insert a second card 6 (application card) into the reading/writing device 3. On this card a plurality of e.g. children-friendly network sites can be stored. The user can select only from these preselected sites with the key 2 or a pointing device. This means that the inventive method is based on a choice of "good" sites and not on blocking the "bad" ones.

The application card 6 can be a family-friendly package card for entertainment or education purposes for use at home or at school or an employee card containing the necessary job-specific sites. Optionally a time counter can be built into the card in order to avoid excessive use of the network resources or in order to restrict children's network access time.

The site list stored on the application card 6 can be updated by the provider or the user's organisation or even by the parents. The number of second cards a user can have is in general unlimited.

Alternatively the second card 6 can unlock a keyboard allowing the terminal device to function normally as a personal computer. In this case the network access is unlimited. This feature is in general designed for adults or for children under supervision. In this preferred embodiment the keyboard is a virtual one shown on the display device 4, whereby the selection of letters and/or numbers is performed with the key 2 or a pointing device, but a real keyboard can also be used. In the case of this non-restrictive more adult-oriented second card the user must enter his PIN code again for security and children's safety reasons.

As in the case of the restrictive application card like the family-friendly package card mentioned above, it is possible to built in a time counter or even a writable log-file on the card.

If the user wants to perform a transaction for e.g. online shopping, then he can insert as a third card a credit card 7 into the card reading device. For more security the card 7 can be accepted only if the ID number of the card is found in the communication terminal device's database. After this step the user is prompted to type in his PIN code.

The card reading device reads the information stored on the card(7) and adds for security reasons the actual time and date information. Then the card and date data are encrypted and sent to the selected online vendor. The time information is useful in order to determine whether the signal has been send directly or not.

The online vendor can optionally send an encrypted signal containing date and time and indicating receipt of the data within a predefined short period of time. The time calculation is based on the time information sent with the card data by the user. If the time period elapsed between sending of the data and receiving them by the vendor is larger than a predefined value, then - for security reasons - the transaction is not valid.

The transaction is also invalid if the vendor's signal travelling time exceeds a predefined time value. Optionally, like in real life the vendor can prompt the user to send a digital signature in order to confirm the transaction. As in the cases mentioned above, if the vendor receives the user's the cases mentioned above, if the vendor receives the user's digital signature after a predefined time period the transaction is cancelled.

In another embodiment of the invention, the smart card reading/writing device can be an external module, which can be connected to any personal computer. Thus any computer can be upgraded to reach this level of Internet access control with low costs. In such a case the system switches off when the card reading device is not connected properly.

The inventive system and method offer a very high security level due to the combination of at least two cards, the necessary knowledge of a password and a PIN code and finally due to the encryption and signature method concerning credit card transactions and the card-controlled virtual keyboard in keyboardless systems. This way the user can perform safe online shopping simply by using his credit card. In addition the inventive system offers time and site restrictions and the possibility to monitor the user's activity by means of a log-file. In combination with the device disclosed in WO 97/20418 it offers a safe, portable and user-friendly solution for families, companies and organisations. Furthermore, it offers the possibility to upgrade normal computers to reach a high level of network access control with low costs.

As stated above, the second card contains a list of Internet or other network sites and/or a list with network applications the user is allowed to run, and has also the option to unlock a virtual or real keyboard for free access. However, the possibility of unlocking could be provided by another card (i.e. the connectivity authorization to the virtual or normal keyboard card). This other card can perform the connection and the disconnection only and can be entered either directly after the first card or after the second card or after the smart credit card.

## Claims

1. A method for providing a communication terminal device (1) with networking access control features and in particular with Internet authentication and online shopping features comprising the steps of:
inserting a first card (5) containing the user name, the password and the committed service provider or the organisation or company number into a card reading device (3);
entering a PIN code; and
inserting a second card (6) which allows defined access to a network.

2. The method according to claim 1, characterised in that the used cards (5, 6) are smart cards and that the used card reading device (3) is a smart card reading device.

3. The method according to claim 1 with the intermediary step of entering the password before the PIN code.

4. The method according to claims 1 - 3 with the intermediary step of entering the PIN code after inserting the second card (6).

5. The method according to claims 1 - 4, characterised in that the second used card (6) contains the same user information as the first used card (5).

6. The method according to any of the claims 1 - 5, characterised in that the second used card (6) contains a defined preselected list of Internet or other network sites and/or a list with network applications the user is allowed to run.

7. The method according to any of the claims 1 - 5, characterised in that the second card (6) unlocks a keyboard for free access to any desired site.

8. The method according to claim 7, characterised in that the keyboard is a virtual keyboard appearing on a display device (4).

9. The method according to claims 1 - 8, with the additionally steps of:
inserting a credit card (7) into the card reading device (3);
entering a PIN code;
encrypting the data stored on the card (7);
adding encrypted time and date information to the encrypted card data; and
sending the encrypted data to an online vendor or organization.

10. The method according to claim 9, characterised in that the credit card (7) is not accepted, if the ID number of the card is not found in the communication terminal device's database.

11. The method according to claim 9, characterised in that the credit card (7) is a smart credit card.

12. The method according to claims 9, 10 or 11, characterised in that the transaction is cancelled if the data are received by the vendor after a time period, which is larger than a predefined period of time.

13. The method according to claims 9, 10, 11 or 12 with the additionally step of:
receiving a vendor's signal indicating receipt of the data.

14. The method according to claim 13, characterised in that the transaction is cancelled if the vendor's signal is received after a time period that exceeds a predefined value.

15. The method according to claims 13 or 14, with the additionally steps of:
receiving a vendor's signal indicating receipt of the data and prompting for a digital signature to confirm the transaction; and
sending an encrypted digital signature with time and date attached to to the vendor.

16. The method according to claim 15, characterised in that the transaction is cancelled if the vendor's signal is received after a time period that exceeds a predefined value and/or if the vendor receives the digital signature with a delay which exceeds a predefined value.

17. A system for applying the method of claims 1 - 16 consisting of personal computer hardware and networking elements, characterized in that it contains a card reading device (3).

18. The system according to claim 17, characterised in that the card reading device (3) is a smart card reading device.

19. The system according to claim 17 or 18, characterised in that the card reading device (3) is an internal card reading module.

20. The system according to claim 17 or 18, characterised in that the card reading device (3) is an external card reading module, whereby the system switches off when the card reading device (3) is not connected properly.

21. The system according to claim 17 or 18, characterised in that it contains a terminal device (1) having a modem or a network card, a processor board, a power supply unit and a card reading device (3), whereby it contains no more than four keys (2).

22. The system according to claim 21, characterised in that it contains a mouse device.

23. The system according to claim 21, characterised in that it contains a display device (4).

24. The system according to claim 21, characterised in that it contains a keyboard.

25. The system according to claim 23, characterised in that the display device (3) works as a virtual keyboard shown thereon.

26. The method according to any of the claims 1 - 16, characterised in that the card reading device (3) is a card reading/writing device.

27. The system according to any of the claims 17 - 25, characterized in that the card reading device (3) is a card reading/writing device.
